# EUROPEAN PATENT APPLICATION

(11) **EP 2 075 679 A1**
(43) Date of publication of application: **01.07.2009**
(21) Application number: 08253485.0
(22) Date of filing: 27.10.2008
(51) Int. Cl.: G06F 3/045

(54) **Touch panel**

(30) Priority: 19.12.2007 TW 96148681
(71) Applicant: ASUSTeK Computer Inc., Peitou,Taipei (TW)
(72) Inventor: Chung, Tzu Chiang, Peitou, Tapei (TW)
(74) Representative: Johnson, Terence Leslie

(57) **Abstract**

A touch panel is provided. The touch panel (60) includes a resistance panel module (10) and a detecting module (50). The resistance panel module (10) includes a first conducting path and a second conducting path. When an event of multiple-point touching occurs, the first conducting path is electrically connected to the second conducting path. The detecting module (50) is coupled to the touch panel (10). The detecting module detects a variation of the resistance value between the first conducting path and the second conducting path to estimate the event of multiple-point touching. Therefore, the variation of the resistance value can serve as an input signal of an interface between humans and machines to control an electronic device.

## Description

### BACKGROUND OF THE INVENTION

### Field of the Invention

The present invention relates to a resistance type touch panel, and in particular, to a detecting method of multiple-point touching.

### Description of Related Art

With rapid developments and applications in information technology, wireless mobile telecommunication, and information appliances, input devices of many information products are being changed from a traditional keyboard, mouse and so forth to touch panels, so as to satisfy the requirements of convenience in carrying, light weight, and user-friendly operations.

Presently, a touch panel that can be operated by human fingers is divided into two categories according to a driving method of the touch panel, i.e. a resistance panel module and a capacitor panel module. With reference to the resistance panel module, a user is required to exert physical pressure on the resistance panel module, so that a portion inside the resistance panel module is electrically connected and accordingly a corresponding coordinate signal is generated. Because of this a resistance panel module is likely to malfunction. A detecting method of one-point touching of a conventional resistance panel module is further described below with reference to the drawings.

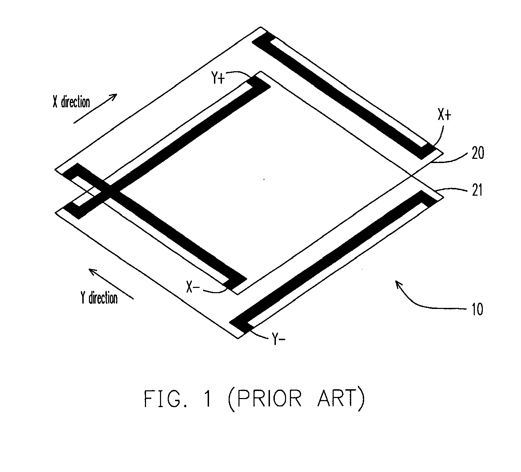

Fig. 1 is a schematic view of a resistance panel module. Referring to Fig. 1, a resistance panel module 10 is constituted by conductive substrates 20 and 21. The conductive substrates 20 and 21 respectively have a transparent resistance layer, and the conductive substrate 20 and the conductive substrate 21 are spaced apart with a small gap, so that the conductive substrates 20 and 21 are not electrically connected. The conductive substrate 20 has two sides, i.e., a side X+ and a side X-. The conductive substrate 21 has two sides, i.e., a side Y+ and a side Y-.

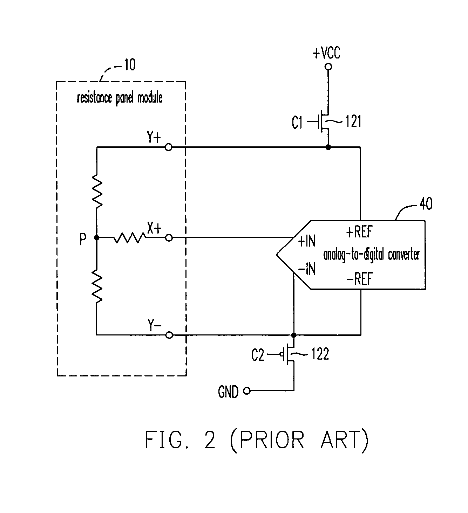

Fig. 2 is a schematic view illustrating a principle of detecting a coordinate in a Y direction when a touch panel is touched at one point, as referred to Figs. 1 and 2. When a point P of a touch control interface (not shown) is touched, the conductive substrates 20 and 21 contact each other at a position corresponding to the point P and accordingly, are electrically connected. Then, a detecting module detects the coordinates of the point P in an X direction and a Y direction respectively.

When detecting the coordinate in the Y direction, the side X- is switched to an open circuit state. A control signal C1 controls a switch 121 to be switched on/off, and thereby a voltage +VCC is supplied to the side Y+. Further, a control signal C2 controls a switch 122 to be switched on/off, and thereby a ground (earth) voltage GND is supplied to the side Y-. Then, a voltage difference between the side X+ and the side Y- is measured by an analog-to-digital converter 40. The voltage difference between the side X+ and the side Y- is proportional to the coordinate in the Y direction. Therefore, according to the voltage difference between the side X+ and the side Y-, the coordinate of the point P in the Y direction can be estimated. Similarly, according to the same principle, the coordinate of the point P in the X direction can be estimated, and accordingly a detailed description thereof is not repeated herein.

It should be noted that the conventional resistance panel module can only detect the event of one-point touching. When an event of multiple-point touching occurs, the conventional resistance panel module fails to provide a corresponding detection. Therefore, the conventional resistance panel module can not meet the demands of multiple functions.

### SUMMARY OF THE INVENTION

The present invention seeks to provide a touch panel capable of detecting a multiple-point touching event.

The present invention therefore seeks to provide a touch panel capable of estimating a multiple point touching according to a variation of the resistance value of a conducting path in the resistance panel module.
According to one aspect of the invention, there is provided a touch panel, comprising: a resistance panel module including a first conducting path and a second conducting path; a voltage dividing resistance, one end of the voltage dividing resistance receiving a voltage source; a selector connecting the other end of the voltage dividing resistance and connecting two ends of the first conducting path and two ends of the second conducting path; and a detecting module coupled to the selector, wherein when a multiple-point touching event occurs, the first conducting path is electrically connected to the second conducting path at multiple points, the selector selects the first conducting path to connect the voltage dividing resistance in series, and the detecting module detects the two ends of the first conducting path, so as to estimate the event of multiple-point touching.

The present invention thus provides a touch panel including a resistance panel module, a voltage dividing resistance, a selector, and a detecting module. The resistance panel module includes a first conducting path and a second conducting path. One end of the voltage dividing resistance receives a voltage source. The selector connects the other end of the voltage dividing resistance, and connects two ends of the first conducting path and two ends of the second conducting path. The detecting module is coupled to the selector. When the event of multiple-touching occurs, the first conducting path is electrically connected to the second conducting path at multiple points, the selector selects the first conducting path to connect the voltage dividing resistance in series, and the detecting module detects the two ends of the first conducting path, so as to estimate the event of multiple-point touching.

According to one embodiment of the present invention, the selector may include a first multiplexer, a second multiplexer, and a third multiplexer. The first multiplexer may include a first input terminal, a second input terminal, and an output terminal respectively connected to the first end of the first conducting path, the first end of the second conducting path, and the voltage dividing resistance. The second multiplexer may further include a first input terminal, a second input terminal, and an output terminal respectively connected to the first end of the first conducting path, the first end of the second conducting path, and the detecting module. The third multiplexer may thus include a first input terminal, a second input terminal, and an output terminal respectively connected to the second end of the first conducting path, the second end of the second conducting path, and the detecting module.

According to one embodiment of the present invention, the detecting module is preferably an analog-to-digital converter having a first input terminal and a second input terminal respectively coupled to the output terminal of the second multiplexer and the output terminal of the third multiplexer.

According to one embodiment of the present invention, the detecting module can detect the two ends of the first conducting path means detecting the voltage or the resistance value at the two points of the first conducting path, so as to estimate a relative distance of the event of multiple-point touching. According to another embodiment, a table is suitably constructed based on the result of estimating the event of multiple-point touching according to the resistance value, and the relative distance corresponding to the resistance value is obtained by looking up the table. According to still another embodiment, when no matching data are found in the table, two resistance values adjacent to the resistance value may be based to perform an interpolation method to obtain the corresponding relative distance. According to another embodiment of the present invention, the event of multiple-point touching is suitably a two-point touching event (i.e., the touch panel is touched at two points).

According to one embodiment of the present invention, the resistance panel module may include a first conductive substrate and a second conductive substrate. The first conductive substrate suitably has the first conducting path in a first direction. The second conductive substrate is suitably substantially parallel to the first conductive substrate. The second conductive substrate suitably has the second conductive path in a second direction, wherein the first direction and the second direction are substantially perpendicular to each other. According to another embodiment, the resistance panel module is preferably a 4-wire type resistance panel module.
According to a second aspect of the invention, there is provided a touch panel, comprising: a resistance panel module including a first conducting path and a second conducting path; a first voltage dividing resistance, one end thereof being coupled to the first conducting path; a second voltage dividing resistance, one end thereof being coupled to the second conducting path; a selector receiving a voltage source, wherein the selector connects the other end of the first voltage dividing resistance and the other end of the second voltage dividing resistance, and connects two ends of the first conducting path and two ends of the second conducting ends; and a detecting module coupled to the selector; wherein when a multiple-point touching event occurs, the first conducting path is electrically connected to the second conducting path at multiple points, the selector selects the voltage source to couple the first voltage dividing resistance, and the detecting module detects the two ends of the first conducting path, so as to estimate the event of multiple-point touching.

From another point of view, the present invention thus provides a touch panel including a resistance panel module, a first voltage dividing resistance, a second voltage dividing resistance, a selector, and a detecting module. The resistance panel module may include a first conducting path and a second conducting path. One end of the first voltage dividing resistance is suitably coupled to the first conducting path. One end of the second voltage dividing resistance is suitably coupled to the second conducting path. The selector suitably receives a voltage source. The selector preferably connects the other end of the first voltage dividing resistance and the other end of the second voltage dividing resistance, and connects two ends of the first conducting path and two ends of the second conducting path. The detecting module is suitably coupled to the selector. When a multiple-point touching event occurs, the first conducting path is suitably electrically connected to the second conducting path at multiple points, the selector selects the voltage source to connect the first voltage dividing resistance in series, and the detecting module detects the two ends of the first conducting path, so as to estimate a multiple-point touching event.

According to one embodiment of the present invention, the selector may include a first multiplexer, a second multiplexer, and a third multiplexer. The first multiplexer suitably has a first input terminal, a second input terminal, and an output terminal respectively connected to the other end of the first voltage dividing resistance, the other end of the second voltage dividing resistance, and the voltage source. The second multiplexer suitably includes a first input terminal, a second input terminal, and an output terminal respectively connected to the first end of the first conducting path, the first end of the second conducting path, and the detecting module. The third multiplexer preferably includes a first input terminal, a second input terminal, and an output terminal respectively connected to the second end of the first conducting path, the second end of the second conducting path, and the detecting module.

When a multiple-point touching event occurs, a portion of the first conducting path in the resistance panel module is connected to a portion of the second conducting path in parallel with multiple points, and thereby the resistance value of the first conducting path is reduced. The variation of the resistance value/voltage of the first conducting path is therefore measured to estimate the multiple-point touching event. Therefore, the variation of the resistance value can serve as an input signal of an interface between humans and machines to control an electronic device.

To make the aforesaid features and advantages of the present invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate schematically embodiments of the invention and, together with the description, serve to explain the principles of the invention.

Fig. 1 is a schematic view of a resistance panel module;

Fig. 2 is a schematic view illustrating a principle of detecting a coordinate in a Y direction when a touch panel is touched at one point;

Fig. 3A is an equivalent circuit diagram of a resistance panel module when the touch panel is not touched at two points according to a first embodiment of the present invention;

Fig. 3B is an equivalent circuit diagram of the resistance panel module illustrating Fig. 3A when two points are touched;

Fig. 4A is a schematic view of a touch panel according to the first embodiment of the present invention;

Fig. 4B is a flow diagram illustrating a detecting method of multiple-point touching according to the first embodiment of the present invention;

Fig. 5A is a schematic view illustrating a selector and a detecting module according to the first embodiment of the present invention; and

Fig. 5B is a schematic view illustrating another selector and another detecting module according to the first embodiment of the present invention.

### DESCRIPTION OF EMBODIMENTS

A conventional resistance panel module can only detect a position of touching when a panel is touched at one point. When a multiple-point touching event occurs, the conventional resistance panel module is not responsive. Accordingly, when a multiple-point touching event occurs, embodiments of the present invention utilize a variation of the resistance value (voltage) of the resistance panel module to estimate the event of multiple-point touching.

### A First Embodiment

Referring to the first embodiment, and using Fig. 1 to illustrate the construction, a multiple-point touching event is illustrated based on two-point touching as an example for illustration; a resistance panel module 10 being a 4-wire type resistance panel module as an example for illustration. It is assumed that an event of two-point touching requires two touch points P1 and P2 (not shown) on a touch control interface. When the touch point P1 is touched, a point Px1 of a conductive substrate 20 is electrically connected to a point Py1 of a conductive substrate 21. When the point P2 is touched, a point Px2 of the conductive substrate 20 is electrically connected to a point Py2 of the conductive substrate 21.

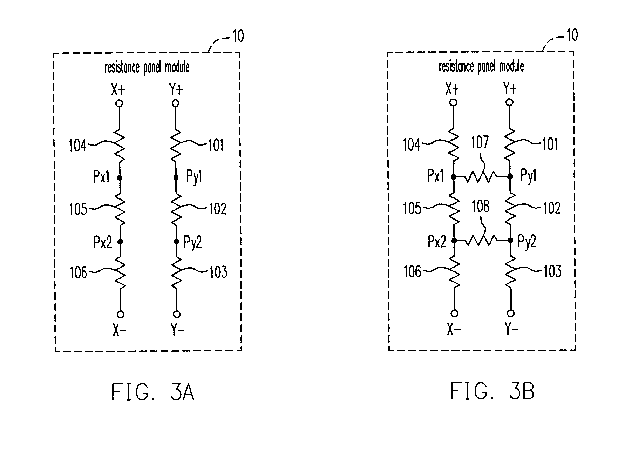

Fig. 3A is an equivalent circuit diagram of a resistance panel module when the touch panel is not touched at the two points according to the first embodiment of the present invention. Fig. 3B is an equivalent circuit diagram of the resistance panel module illustrating Fig. 3A when the two points are touched. (Refer to Figs. 1, 3A and 3B). In the present embodiment, it is assumed that the point Px1 is closer to a side X+ than the point Px2, the point Px2 is closer to a side X- than the point Px1, the point Py1 is closer to a side Y+ than the point Py2, and the point Py2 is closer to a side Y- than the point Py1.

In Figs. 3A and 3B, a resistance 101 is an equivalent resistance between the side Y+ and the point Py1, a resistance 102 is the equivalent resistance between the point Py1 and the point Py2 in the conductive substrate 21, and a resistance 103 is the equivalent resistance between the point Py2 and the side Y-. Similarly, a resistance 104 is the equivalent resistance between the side X+ and the point Px1, a resistance 105 is the equivalent resistance between the point Px1 and the point Px2 in the conductive substrate 20, and a resistance 106 is the equivalent resistance between the point Px2 and the side X-. Furthermore, in Fig. 3B, a resistance 107 is the equivalent resistance between the point Py1 and the point Px1, and a resistance 108 is the equivalent resistance between the point Py2 and the point Px2. Because resistance values of the resistances 107 and 108 are relatively small, the resistance values of the resistances 107 and 108 can be ignored.

When a two-point touching event does not occur, the resistance value between the side Y+ and the side Y- is the sum of the resistance values of the resistances 101, 102, and 103. However, when a two-point touching event occurs, the resistance value between the point Py1 and the point Py2 is reduced because the resistance 102 is connected in parallel to the circuit consisting of the resistance 107, the resistance 105 and the resistance 108 in series connection. As a distance between the point Py1 and the point Py2 increases along a Y direction, i.e., the resistance value between the point Py1 and the point Py2 becomes larger, the reduction of the resistance value between the point Py1 and the point Py2 increases due to the parallel connection effect of the resistances. In other words, according to the deduction of the resistance value between the side Y+ and the side Y-, the distance between the point Py1 and the point Py2 along the Y direction can be estimated.

Likewise, when a two-point touching event does not occur, the resistance value between the side X+ and the side X- is the sum of the resistance values of the resistances 104, 105, and 106. However, when a two-point touching event occurs, the resistance value between the point Px1 and the point Px2 is reduced because the resistance 105 is connected in parallel to the circuit consisting of the resistance 107, the resistance 102 and the resistance 108. As the distance between the point Px1 and the point Px2 increases along an X direction, i.e., the resistance value between the point Px1 and the point Px2 becomes larger, the reduction of the resistance value between the point Px1 and the point Px2 increases due to the parallel connection effect of the resistances. In other words, according to the deduction of the resistance value between the side X+ and the side X-, the distance between the point Px1 and the point Px2 along the X direction can be estimated.

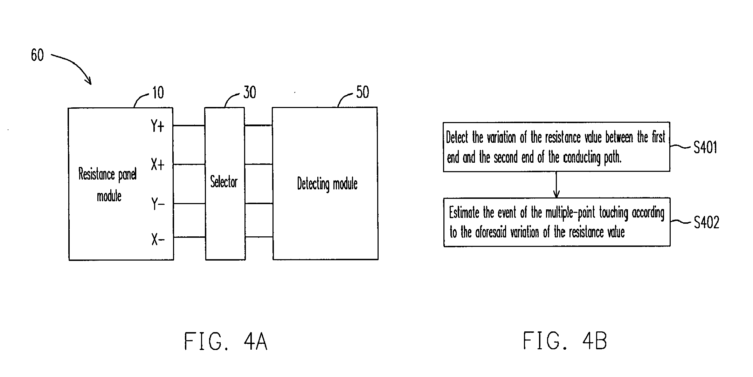

Fig. 4A is a schematic view of the touch panel according to the first embodiment of the present invention. Referring to Figs. 1 and 4A, a touch panel 60 includes the resistance panel module 10, a selector 30 and a detecting module 50. The resistance panel module 10 has the conductive substrates 20 and 21 (Fig. 1). The conductive substrate 20 has a conductive path along the X direction. The side X+ and the side X- are two ends of the conductive path along the X direction respectively. The conductive substrate 21 is parallel to the conductive substrate 20. The conductive substrate 21 has a conductive path along the Y direction. The side Y+ and the side Y- are two ends of the conductive path along the Y direction respectively. The X direction and the Y direction are perpendicular to each other. When the event of touching occurs, the conductive substrates 20 and 21 are electrically connected to each other. On the contrary, when the event of touching is eliminated, the conductive substrates 20 and 21 are not electrically connected to each other. The selector 30 is coupled between the resistance panel module 10 and the detecting module 50, so as to determine the coupling relationship between the resistance panel module and the detecting module 50. The detecting module 50 is used to detect the variation of the resistance value of the resistance panel module 10 between the side X+ and the side X-, or between the side Y+ and Y-, so as to estimate the event of the touching.

Fig. 4B is a flow diagram illustrating a detecting method of multiple-point touching according to the first embodiment. Refer to Figs. 1, 3A, 3B, 4A, and 4B. When a two-point touching event occurs to the resistance panel module 10, the detecting module 50 may detect the variation of the resistance value between the side Y+ and the side Y- (in a step S401). Next, the distance between the point Py1 and the point Py2 along the Y direction is estimated according to the variation of the resistance value (in a step S402). In detail, when the resistance value between the side Y+ and the side Y-increases, this means that the distance between the point Py1 and the point Py2 along the Y directiondecreases. In contrast, when the resistance value between the side Y+ and the side Y- decreases, this means that the distance between the point Py1 and the point Py2 along the Y direction is increasing.

Hereinafter, the step S401 is explained in detail. When touching event does not occur, the detecting module 50 may first detect a first resistance value between the side Y+ and the side Y-. Then, when a two-point touching event occurs, the detecting module 50 switches the side X+ and the side X- to an open circuit state, and detects a second resistance value between the side Y+ and the side Y-. According to the difference between the first resistance value and the second resistance value, the variation of the resistance value between the side Y+ and the side Y- can be determined. An implementation of measuring the variation of the resistance value between the side Y+ and the side Y- of the touch panel 60 is provided below as a reference for persons of ordinary skill in the art.

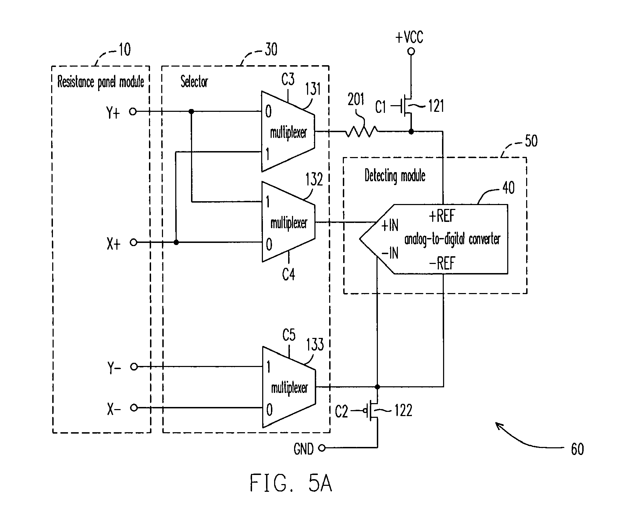

Fig. 5A is a schematic view of the touch panel according to the first embodiment of the present invention. Refer to Figs. 1, 3A, 3B, 4A, and 5A. According to the present embodiment, the touch panel 60 includes the resistance panel module 10, the selector 30, the voltage dividing resistance 201, the detecting module 50, and switches 121 and 122. The detecting module 50 may be an analog-to-digital converter 40, for example. The analog-to-digital converter 40 has input terminals +IN and -IN, and reference voltage terminals +REF and -REF. The analog-to-digital converter 40 may change the voltage across the input terminal +IN and the input terminal -IN into digital data. Because the resistance of the input terminal +IN is infinite, the input terminal +IN of the analog-to-digital converter 40 may be regarded as havingno electric current flowing through it. The reference voltage terminals +REF and -REF can serve as an upper limit value and a lower limit value during the voltage conversion of the analog-to-digital converter 40.

The switch 121 can be switched on/off according to a control signal C1, and thereby a voltage +VCC can be supplied to one end of the voltage dividing resistance 201 and the reference voltage terminal +REF of the analog-to-digital converter 40. The switch 122 is switched on/off according to a control signal C2, and thereby a ground voltage GND can be supplied to the input terminal -IN and the reference voltage terminal -REF of the analog-to-digital converter 40.

The selector 30 includes multiplexers 131, 132 and 133. According to the present embodiment, output terminals of the multiplexers 131, 132 and 133 are respectively coupled to the other end of the voltage dividing resistance 201, the output terminals +IN and -IN of the analog-to-digital converter 40. The multiplexers 131, 132 and 133 determine the coupling relationship between the resistance panel module 10 and the analog-to-digital converter 40 according to control signals C3∼C5. The detected data of the detecting module 50 varies according to different control signals C1∼C5. For example, when it is intended to detect the variation of the resistance value between the side Y+ and the side Y- by using the detecting module 50, the switch 121 can be switched to a conducting state according to the control signal C1. The switch 122 can be switched to the conducting state according to the control signal C2. The multiplexer 131 can be switched to 0 according to the control signal C3, so that the voltage dividing resistance 201 is coupled to the side Y+. The multiplexer 132 can be switched to 1 according to the control signal C4, so that the input terminal +IN of the analog-to-digital converter 40 is coupled to the side Y+. The multiplexer 133 can be switched to 1 according to the control signal C5, so that the input terminal -IN of the analog-to-digital converter 40 is coupled to the side Y-.

The resistance values of the voltage VCC, the ground voltage GND, and the voltage dividing voltage 201 are already known. Further, the voltage across the side Y+ and the side Y- can be detected by the analog-to-digital converter 40. Therefore, the resistance value between the side Y+ and the side Y- can be calculated by using the theorem of voltage division, so as to detect the variation of the resistance value between the side Y+ and the side Y-. Similarly, when the switches 121 and 122 are switched to the conducting state, and the multiplexers 131, 132 and 133 are respectively switched to 1, 0 and 0, the analog-to-digital converter 40 can measure the variation of the resistance value between the side X+ and the side X-. It should be noted that persons of ordinary skill in the art can implement the voltage dividing resistance 201 with a smaller resistance value, so that a dynamic range of the input terminal of the analog-to-digital converter 40 may be prevented from being affected.

Moreover, when a one-point touching event occurs, the switches 121 and 122 are switched to the conducting state, and the multiplexers 131, 132 and 133 are respectively switched to 0, 0 and 1, the analog-to-digital converter 40 can detect the position of the touch point in the Y direction. When such a one-point touching event occurs, the switches 121 and 122 are switched to the conducting state, and the multiplexers 131, 132 and 133 are respectively switched to 1, 1 and 0, and the analog-to-digital converter 40 can detect the position of the touch point in the X direction.

Furthermore, when a multiple-point touching event occurs, the switches 121 and 122 are switched to the conducting state, and the multiplexers 131, 132 and 133 are respectively switched to 0, 0 and 1, and the analog-to-digital converter 40 can detect the position of the middle point with respect to the multiple points in the Y direction. When such an event as multiple-point touching occurs, the switches 121 and 122 are switched to the conducting state, and the multiplexers 131, 132 and 133 are respectively switched to 1, 1 and 0, the analog-to-digital converter 40 can detect the position of the middle point with respect to the multiple points in the X direction. Table 1 below illustrates to persons of ordinary skill in the art the functions of the detecting module 50 corresponding to the operation states of the switches 121 and 122 and the multiplexers 131∼133.

**Table 1: The functions of the detecting module 50 corresponding to the operation states of the switch and the multiplexer.**

| Switch 121 | Switch 122 | Multiplexer 131 | Multiplexer 132 | Multiplexer 133 | The measurement of the detecting module 50 |
|---|---|---|---|---|---|
| Conducting state | Conducting state | 0 | 1 | 1 | The variation of the resistance value between the side Y+ and the side Y- |
| Conducting state | Conducting state | 1 | 0 | 0 | The variation of the resistance value between the side X+ and the side X- |
| Conducting state | Conduc ting state | 0 | 0 | 1 | The position of the touch point in the Y direction |
| Conducting state | Conducting state | 1 | 1 | 0 | The position of the touch point in the X direction |

Please refer to Figs. 1, 3A, 3B and Fig. 4A. It should be noted that the variation of the resistance value in the step S401 can serve as an input signal of an interface between humans and machines. For example, if a user would like to zoom in a photo displayed by a display device (not shown), the user may put two fingers on any two points on the touch control interface of the control panel 60 respectively. As the distance between two fingers in the Y directions increases, the resistance value between the side Y+ and the side Y-decreases; on the contrary, as the distance between the two fingers in the Y direction decreases, the resistance value between the side Y+ and the side Y- increases gradually. On the other hand, a controller of the display device (not shown) can zoom in/out the photo according to the resistance value between the side Y+ and the side Y-. As the resistance value between the side Y+ and the side Y- decreases, the controller gradually zooms in the photo displayed by the display device; in contrast, as the resistance value between the side Y+ and the side Y- increases, the controller gradually zoom out the photo displayed by the display device.

It should be known by the persons of ordinary skill in the art that the present invention is not limited to the aforesaid example regarding zooming in/out the photo displayed by the display device, as this example is merely an optional implementation for illustration. In other embodiments, the variation of the resistance value between the side Y+ and the side Y- can be applied to control the operation of every electronic device.

Further, the persons of ordinary skill in the art can construct a table illustrating the corresponding relationship of the distance between two touch points and the resistance value between the side Y+ and the side Y-. When the detecting module 50 detects the resistance value between the side Y+ and the side Y-, the distance between the two touching points can be obtained by looking up the table. Furthermore, the persons of ordinary skill can incorporate an interpolation method in the table to increase the resolution of the table. That is to say, if no matching data are found in the table, by looking up two adjacent resistance values to the resistance value, the distance between the two touching points can be obtained by performing an interpolation.

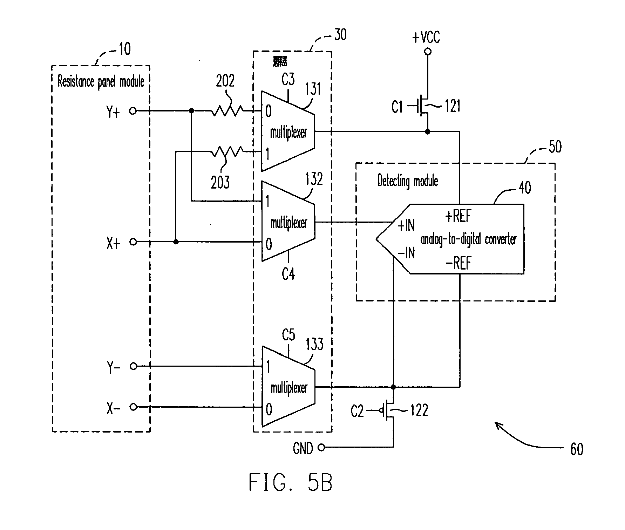

Moreover, Fig. 5A is merely an optional implementation of the touch panel 60. The persons of ordinary skill in the art can modify the coupling relationship and the layout of the touch panel 60 according to actual demands. Fig. 5B is a schematic view of another touch panel according to the first embodiment of the present invention. Please refer to Figs. 5A and 5B. Figs. 5B and 5A are similar. The difference lies in that voltage dividing resistances 202 and 203 in Fig. 5B are substituted for the voltage dividing resistance 201 in Fig. 5A.

Although the above embodiment has disclosed a possible type of the touch panel and the detecting method of multiple-point touching, it would be clear to the persons of ordinary skill in the art that different manufacturers may develop different designs of the touch panel and a method for detecting multiple-point touching, and the application of the present invention should not be limited to this type. In other words, as long as the variation of the resistance value of the resistance panel module is utilized to estimate the event of multiple-point touching, such implementations have conformed to the present invention. Some other embodiments are further discussed hereinafter to allow people skilled in the art to recognize and embody the present invention.

### A Second Embodiment

Please refer to Figs. 1, 3A, 3B and 4A. The present embodiment resembles the first embodiment. The difference lies in that, in the first embodiment, the distance between the point Py1 and the point Py2 in the Y direction is detected by measuring the variation of the resistance value between the side Y+ and the side Y-; however, in the present embodiment, the distance between the point Px1 and the point Px2 in the X direction is detected by measuring the variation of the resistance value between the side X+ and side X. Thereby, the second embodiment may achieve functions and effects similar to those of the first embodiment.

### A Third Embodiment

Please refer to Figs. 1, 3A, 3B and 4A. The present embodiment resembles the first embodiment. The difference lies in that, in the first embodiment, the distance between the point Py1 and the point Py2 in the Y direction is detected by measuring the variation of the resistance value between the side Y+ and the side Y-; however, in the present embodiment, not only the distance between the point Py1 and the point Py2 in the Y direction is detected by measuring the variation of the resistance value between the side Y+ and the side Y-, but also the distance between the point Px1 and the point Px2 in the X direction is detected simultaneously by measuring the variation of the resistance value between the side X+ and the side X-.

It is advantageous to do so because the variation of the resistance value between the side X+ and the side X- can serve as the input signal of the interface between humans and the machines when the distance between the two touch points only varies in the X direction. On the other hand, the variation of the resistance value between the side Y+ and the side Y- can serve as the input signal of the interface between humans and the machines when the distance between the two touch points only varies in the Y direction.

In summary, the present invention estimates the event of multiple-point touching by measuring the variation of the resistance value of the conducting path in the resistance panel module. Therefore, the variation of the resistance value can serve as the input signal of the interface between humans and machines to control the electronic device.

Although the present invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A touch panel, comprising:
a resistance panel module including a first conducting path and a second conducting path;
a voltage dividing resistance, one end of the voltage dividing resistance receiving a voltage source;
a selector connecting the other end of the voltage dividing resistance and connecting two ends of the first conducting path and two ends of the second conducting path; and
a detecting module coupled to the selector,
wherein when a multiple-point touching event occurs, the first conducting path is electrically connected to the second conducting path at multiple points, the selector selects the first conducting path to connect the voltage dividing resistance in series, and the detecting module detects the two ends of the first conducting path, so as to estimate the event of multiple-point touching.

2. A touch panel according to claim 1, wherein the selector comprises:
a first multiplexer having a first input terminal, a second input terminal, and an output
terminal respectively connected to the first end of the first conducting path, the first end of the second conducting path, and the voltage dividing resistance;
a second multiplexer having a first input terminal, a second input terminal, and an output terminal respectively connected to the first end of the first conducting path, the first end of the second conducting path, and the detecting module; and
a third multiplexer having a first input terminal, a second input terminal, and an output terminal respectively connected to the second end of the first conducting path, the second end of the second conducting path, and the detecting module.

3. A touch panel according to claim 2, wherein the detecting module is an analog-to-digital converter having a first input terminal and a second input terminal respectively coupled to the output terminal of the second multiplexer and the output terminal of the third multiplexer.

4. A touch panel according to any of claims 1 to 3, wherein the detecting module detecting the two ends of the first conducting path means detecting the voltage at the two ends of the first conducting path, so as to estimate a relative distance of the event of multiple-point touching.

5. A touch panel according to any of claims 1 to 3, wherein the detecting module detects the two ends of the first conducting path means detecting the resistance values at the two ends of the first conducting path, so as to estimate a relative distance of the event of multiple-point touching.

6. A touch panel according to claim 5, wherein a table is constructed based on the result of estimating the event of multiple-point touching according to the resistance value, and the relative distance corresponding to the resistance value is obtained by looking up the table.

7. A touch panel according to claim 6, wherein when no matching data are found in the table, two resistance values adjacent to the resistance value are based to perform an interpolation method to obtain the corresponding relative distance.

8. A touch panel according to any preceding claim, wherein the event of multiple-point touching is the touch panel being touched at two points.

9. A touch panel according to any preceding claim, wherein the resistance panel module comprises:
a first conductive substrate having the first conducting path along a first direction; and
a second conductive substrate parallel to the first conductive substrate, the second
conductive substrate having the second conductive path along a second direction, wherein the first direction and the second direction are perpendicular to each other.

10. A touch panel according to claim 9, wherein the resistance panel module is a 4-wire type resistance panel module.

11. A touch panel, comprising:
a resistance panel module including a first conducting path and a second conducting path;
a first voltage dividing resistance, one end thereof being coupled to the first conducting path;
a second voltage dividing resistance, one end thereof being coupled to the second conducting path;
a selector receiving a voltage source, wherein the selector connects the other end of the first voltage dividing resistance and the other end of the second voltage dividing resistance, and connects two ends of the first conducting path and two ends of the second conducting ends; and
a detecting module coupled to the selector;
wherein when a multiple-point touching event occurs, the first conducting path is electrically connected to the second conducting path at multiple points, the selector selects the voltage source to couple the first voltage dividing resistance, and the detecting module detects the two ends of the first conducting path, so as to estimate the event of multiple-point touching.

12. A touch panel according to claim 11, wherein the selector comprises:
a first multiplexer having a first input terminal, a second input terminal, and an output
terminal respectively connected to the other end of the first voltage dividing resistance, the other end of the second voltage dividing resistance, and the voltage source;
a second multiplexer having a first input terminal, a second input terminal, and an output terminal respectively connected to the first end of the first conducting path, the first end of the second conducting path, and the detecting module; and
a third multiplexer having a first input terminal, a second input terminal, and an output terminal respectively connected to the second end of the first conducting path, the second end of the second conducting path, and the detecting module.

13. A touch panel according to claim 12, wherein the detecting module is an analog-to-digital converter having a first input terminal and a second input terminal respectively coupled to the output terminal of the second multiplexer and the output terminal of the third multiplexer.

14. A touch panel according to any of claims 11 to 13, wherein the detecting module detecting the two ends of the first conducting path means detecting the voltage at the two ends of the first conducting path, so as to estimate a relative distance of the event of multiple-point touching.

15. A touch panel according to any of claims 11 to 13, wherein the detecting module detects the two ends of the first conducting path means detecting the resistance values at the two ends of the first conducting path, so as to estimate a relative distance of the event of multiple-point touching.

16. A touch panel according to claim 15, wherein a table is constructed based on the result of estimating the event of multiple-point touching according to the resistance value, and the relative distance corresponding to the resistance value is obtained by looking up the table.

17. A touch panel according to claim 16, wherein when no matching data are found in the table, two resistance values adjacent to the resistance value are based to perform an interpolation method to obtain the corresponding relative distance.

18. A touch panel according to any of claims 11 to 17, wherein the event of multiple-point touching is the touch panel being touched at two points.

19. A touch panel according to any of claims 11 to 19, wherein the resistance panel module comprises:
a first conductive substrate having the first conducting path along a first direction; and
a second conductive substrate parallel to the first conductive substrate, the second
conductive substrate having the second conductive path along a second direction, wherein the first direction and the second direction are perpendicular to each other.

20. A touch panel according to claim 19, wherein the resistance panel module is a 4-wire type resistance panel module.
